(19) Europäisches Patentamt
European Patent Office
Office européen des brevets

(11) **EP 4 117 322 A1**

(12) **EUROPEAN PATENT APPLICATION**

(43) Date of publication:
**11.01.2023 Bulletin 2023/02**

(21) Application number: **22171510.5**

(22) Date of filing: **04.05.2022**

(51) International Patent Classification (IPC):
**H04W 4/40** (2018.01)     **H04B 7/04** (2017.01)
**H04W 72/04** (2009.01)

(52) Cooperative Patent Classification (CPC):
**H04W 4/40; H04B 7/04; H04W 74/0816**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.07.2021 EP 21184586**

(71) Applicants:
• **VOLKSWAGEN AG**
  **38440 Wolfsburg (DE)**

• Seat, S.A.
  **08760 Martorell (ES)**

(72) Inventors:
• **PFADLER, Andreas**
  **13357 Berlin (DE)**
• **MONTERO BAYO, Luca**
  **08011 Barcelona (ES)**

(74) Representative: **2SPL Patentanwälte PartG mbB**
  **Landaubogen 3**
  **81373 München (DE)**

(54) **METHODS FOR A VEHICLE FOR IMPROVING COMMUNICATION VIA A RADIO CHANNEL, APPARATUS, VEHICLE AND COMPUTER PROGRAM**

(57)     Embodiments relate to a method 100 for a vehicle for improving communication via a radio channel. The method 100 comprises generating 110 a channel occupation message, COM, which comprises information about an occupancy of one or more radio channels and transmitting 120 the COM to a further vehicle.

100

generating a channel occupation message, COM, which comprises information about an occupancy of one or more radio channels — 110

transmitting the COM to a further vehicle — 120

**Fig. 1**

EP 4 117 322 A1

**Description**

The present disclosure relates to the field of wireless communication. Embodiments relate to a method for a vehicle for improving communication via a radio channel, a method for a further vehicle for improving communication via a radio channel, an apparatus, a vehicle and a computer program, more particularly, but not exclusively, to a concept for improving communication in a hidden node scenario.

The development of 5G has brought increased attention to the automotive industry as a vertical manufacturer expected to leverage the most advanced features of the new generation of wireless communications. Among the main novelties of 5G, a wide range of spectrum possibilities (currently licensed up to the 28 GHz band - the first-ever Millimeter wave band for mobile use), enhanced support for high mobility scenarios and new mechanisms to guarantee and predict the experienced Quality of Service (QoS), have been established as key functions to support an increasingly connected transportation ecosystem. Besides, the latest standard release (Rel. 16) has given support to Vehicle-to-Everything (V2X) communications with New Radio (NR) technology, allegedly allowing vehicles to make use of the same spectrum options, even for Vehicle-to-Vehicle (V2V) use cases.

Providing the NR support of V2X, vehicles are also capable of communicating at frequencies above 6 GHz. In 5G, these higher frequency bands are allocated at the mmWave range of the spectrum (30-300GHz). The use of higher frequency bands in communications implies propagating in a harsher channel, where the free-space path loss scales with ($f^2$), and shading by obstacles and atmospheric effects (i.e., water vapor and oxygen absorption, or rain) take a non-negligible role. Services relying on higher frequency systems, with their inherently high channel-induced attenuation, might find challenging to deliver satisfactory QoS in some situations where signal power attenuation is increased, lowering the received Signal-to-Noise Ratio. As a result, 5G User Equipment (UE) is reliant on multi-antenna front-ends to perform beamforming and focus the radiate power towards the intended transmitter/receiver.

It is thus worth considering that vehicles may be equipped with an advanced multi-antenna system. Currently, V2X nodes operate at sub-6GHz bands with omnidirectional antennas. When a node aims to transmit a message, it measures the received power at each available subchannel in the band during a sensing window and selects randomly a suitable subchannel to transmit through among those resources that present low interference. This sensing window is also useful to decode control messages from other nodes and map the expected resource reservations in the near future.

US 2020/022 144 0 A1 shows a user equipment which is enabled to perform communication using beamforming with another user equipment. The user equipment includes a control unit configured to configure, in at least one beam among a plurality of beams, information indicating positions of all of resources in a radio frame. The plurality of beams is transmitted via corresponding resources. Further, the user equipment includes a transmitting unit configured to transmit the plurality of beams using all of the resources, by applying beam switching or beam repetition.

US 2020 / 026 044 0 A1 shows a user device which is enabled to perform communication with another user device by beamforming in a first frequency and a second frequency different from the first frequency. The user device includes a receiving unit configured to receive a first sensing signal in the first frequency. Further the user device includes a control unit configured to select a resource in the second frequency used for transmission, based on a resource location on a radio frame in which the first sensing signal is provided. Additionally, the user device includes a transmitting unit configured to perform data transmission in the second frequency by using the selected resource.

As the antennas are omnidirectional, neighboring vehicles may sense almost the same interferers in most use case scenarios, and hence the transmitter assumes that the receiver may also have availability in the chosen time-frequency resource. This may cause some drawbacks such as the hidden node problem, where the sensing performed by the transmitter fails to identify occupied resources (at the receiver side) because nodes that interfere with the receiver cannot be sensed, e.g., they are out of reach. However, when operating at higher frequency bands (such as the mmWave band), nodes may be expected to make use of multi-element antenna systems with beamforming capabilities. Therefore, the directional nature of beamformed communications may accentuate and pose a big challenge to a hidden node scenario.

It is therefore a finding that communication via a radio channel can be improved by identifying occupied resources at the receiver side, e.g., for a resource selection in beamformed communication. For example, information about a channel occupation of a receiver can be transmitted/received by use of a channel occupation message. That way, information about the channel occupation of the receiver can be shared in an eased way.

Examples provide a method for a vehicle for improving communication via a radio channel. The method comprises generating a channel occupation message, COM, which comprises information about an occupancy of one or more radio channels; and transmitting the COM to a further vehicle. Thus, the further vehicle can be informed about the occupancy of one or more radio channels of the vehicle, which could be used for communication purposes. That way, the further vehicle may be enabled to schedule a transmission of data using the one or more radio channels.

In an example, the COM may comprise information about two or more occupancies of two or more spatial radio channels. Thus, the further vehicle can be enabled to determine a suitable spatial radio channel based on the occupancies. For example, a channel occupancy of a first spatial radio channel may exclude data transmission due to a lack of capacity and a channel occupancy of a second spatial radio channel may allow data transmission. Therefore, the further vehicle can determine the second spatial radio channel for data transmission.

In an example, the method may further comprise forming or selecting at least one beam for communication between the vehicle and the further vehicle via the one or more radio channel. Thus, the vehicle can determine a beam for communication with the further vehicle and vice versa, which may improve the communication, e.g., increase a signal strength.

In an example, the COM may be a broadcast, groupcast or unicast message. Thus, the COM can be transmitted in an appropriated way, e.g., using a broadcast message before or a unicast message after a connection between the vehicle and the further vehicle may be established.

In an example, the method may further comprise receiving a request for communication from the further vehicle and transmitting the COM in response to the request. Thus, the vehicle can transmit the COM on request, e.g., during preparation of data transmission from the further vehicle to the vehicle.

Examples relates to a method for a further vehicle for improving communication via a radio channel with a vehicle. The method comprises receiving a COM, which comprises information about an occupancy of one or more radio channels and transmitting data from the further vehicle based on the COM via the one or more radio channel. Thus, the further vehicle can be informed about the occupancy of one or more radio channels of the vehicle, which could be used for communication purposes. That way, the further vehicle may be enabled to schedule a transmission of data using the one or more radio channels.

In an example, the COM may comprise information about two or more occupancies of two or more spatial radio channels. Thus, the further vehicle can be enabled to determine a suitable spatial radio channel based on the occupancies. For example, the channel occupancy of a first spatial radio channel may exclude data transmission due to a lack of capacity and the channel occupancy of a second spatial radio channel may allow data transmission. Therefore, the further vehicle can determine the second spatial radio channel for data transmission.

In an example, the method may further comprise forming or selecting at least one beam for communication between the vehicle and the further vehicle via the one or more radio channel. Thus, the further vehicle can determine a beam for communication with the vehicle and vice versa, which may improve the communication, e.g., increase a signal strength.

In an example, the method may further comprise forming or selecting an alternative radio channel based on the COM and transmitting at least a part of the data via the alternative radio channel. For example, an occupancy of the one or more radio channel may exclude a data transmission. Thus, the further vehicle may split the data transmission into two parts and may transmit a first part using the one or more radio channel and a second part using the alternative radio channel. That way, the data transmission can be split in a desired way, which enables the use of a free capacity of the one more radio channel still allowing a fully data transmission.

In an example, the COM may be a broadcast, groupcast or unicast message. Thus, the COM can be transmitted in an appropriated way, e.g., using a broadcast message before or a unicast message after a connection between the vehicle and the further vehicle may be established.

In an example, the method may further comprise transmitting a request for receiving the COM and receiving the Com. Thus, the further vehicle can request the COM, e.g., during preparation of data transmission to the vehicle.

In an example, the COM may further comprise information to enable the further vehicle to determine a position of the vehicle. Thus, the further vehicle can determine a position of the vehicle, e.g., for forming/selecting a beam without a need of further messages, which may decrease data traffic.

Examples further provide an apparatus, comprising one or more interfaces configured to communicate with a communication device or user equipment. The apparatus further comprises processing circuitry configured to control the one or more interfaces and to perform the method for user equipment and/or a communication device described above.

Examples further provide a vehicle comprising the apparatus as described above.

Examples further relate to a computer program having a program code for performing the method described above, when the computer program is executed on a computer, a processor, or a programmable hardware component.

Some examples of apparatuses and/or methods will be described in the following by way of example only, and with reference to the accompanying figures, in which

Fig. 1 shows an example of a method for a vehicle;

Fig. 2 shows an example of a method for a further vehicle;

Fig. 3a-3c show an example of a channel occupation prediction;

Fig. 4a-4c show examples of hidden node problems;

Fig. 5 shows a SS Burst and S-SSB structure in NR V2X SL;

Fig. 6 shows a slot and resource grid structure in NR V2X SL;

Fig. 7a-7b show proposed beam management strategies for V2V beamforming;

Fig. 8 shows a radiation pattern for the beamset used in the evaluation (Directivity [dB]);

Fig. 9 shows a mean recovery time of beam management strategies for different number of neighbors in LOS and NLOS visibility conditions;

Fig. 10 shows a loss complementary cumulative distribution of beam management strategies in different traffic scenario for $N_{ngh}$ = {4,10} and LOS conditions;

Fig. 11 shows a beam-based Channel Usage Ratio (BB-CUR) for medium intensity data traffic and the resources needed by the proposed strategies, compared for different total channel bandwidths (BW) and number of neighbors ($N_{ngh}$);

Fig. 12 shows a beam-based Channel Usage Ratio (BB-CUR) of the resources needed by the proposed strategies for different $K_{CSI}$, transmission power of 23 dBm and 200 MHz bandwidth; and

Fig. 13 shows a block diagram of an apparatus.

Some examples are now described in more detail. However, other possible examples are not limited to the features of these embodiments described in detail. Other examples may include modifications of the features as well as equivalents and alternatives to the features. Furthermore, the terminology used herein to describe certain examples should not be restrictive of further possible examples.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

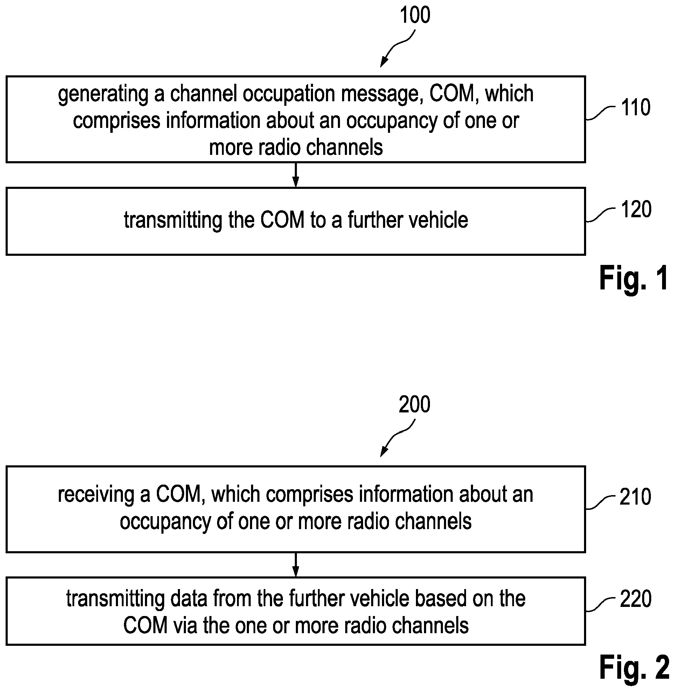

Fig. 1 shows an example of a method 100 for a vehicle. The method 100 for the vehicle is for improving communication via a radio channel. The method 100 comprises generating 110 a channel occupation message, COM, which comprises information about an occupancy of one or more radio channels and transmitting 120 the COM to a further vehicle. Thus, the vehicle can inform the further vehicle about an occupancy of a radio channel. This way, the further vehicle can be enabled to schedule a transmission, such that the radio channel can be used more efficient and/or that a transmission time can be decreased.

5G V2X has added new functionalities that can mitigate some of the problems experienced in hidden node situations. However, these solutions are mainly based on retransmissions (blind or feedback-based) and not in actual identification of occupied resources. Retransmissions cause unnecessary load to the channel. By transmitting the COM a load of a mobile communication system can be reduced, since unnecessary retransmission can be avoided.

In general, the vehicle/further vehicle may comprise a device that is capable of communicating wirelessly. For example, the vehicle/further vehicle may be configured to communicate in a cellular mobile communication system. Accordingly the vehicle/further vehicle may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In addition the vehicle and the further vehicle may be suitable for, or configured to, communicating/communicate via non-cellular communication systems, e.g., via a device-to-device vehicular communication system, e.g., according to the IEEE 802.11p standard (Institute of Electrical and Electronics Engineers standard 802.11p for vehicular communication) or via a wireless local area network (e.g., according to IEEE 802.11a, IEEE 802.11b, IEEE 802.11g, IEEE 802.11n, IEEE 802.11ac or IEEE 802.11ax, also known as Wi-Fi 1 through Wi-Fi 6(E)). In particular, the vehicle/further vehicle may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

A connection between the vehicle and the further vehicle may be a wireless connection, e.g., a mmWave-based connection over the mobile communication system (e.g., using carrier frequencies of at least 20 GHz) or may be performed at lower carrier frequencies, e.g., using carrier frequencies of at most 7.5 GHz. For example, the wireless connection between the vehicle and the further vehicle may be initiated using the protocols of the mobile communication system, or using a short-range communication system, such as via a wireless local area network outlined above.

As is evident from the above example, while the communication between the vehicle and the further vehicle occurs via the mobile communication system, additional communication and/or alternatively communication between the vehicle and the further vehicle may occur via a vehicular communication system. Such communication may be carried out directly, e.g., by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc.

For example, the COM may be broadcasted via sub-6GHz V2X bands to extend the spread of the data. A V2X communication, e.g., between the vehicle and the further vehicle may be Wireless Local Area Network (WLAN) technology. This may work directly between vehicle and vehicle (V2V) and/or traffic infrastructure (V2I), which form a vehicular ad-hoc network as two V2X senders come within each other's range. Messages like Cooperative Awareness Messages (CAM) or Basic Safety Message (BSM) and Decentralized Environmental Notification Messages (DENM) may be used for communication between the vehicles. Other roadside infrastructure related messages are Signal Phase and Timing Message (SPAT), in Vehicle Information Message (IVI), and Service Request Message (SRM).

In case of aiming to establish a link with the one or more (discovered) communication devices, e.g., the further vehicle, the vehicle may make an initial guess of the configuration of the antenna system to define a beam strategy (such as a reduced beamset for beamsweep, beamwidth, Angle of Departure, antenna weights, etc.) to transmit a signal, e.g., a COM. This initial guess might be based on a relative position, predicted/intended trajectory of both transmitting and receiving nodes, angle of arrival, etc.

A communication device can be located in the fixed or stationary part of the network or system. A communication device may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A communication device can be a wireless interface of a wired network, which enables transmission and reception of radio signals to a UE, such as the UE. Such a radio signal may comply with radio signals as, for example, standardized by 3GPP or, generally, in line with one or more of the above listed systems. Thus, a communication device may correspond to a NodeB, an eNodeB, a BTS, an access point, etc.

The communication that occurs before connection establishment, and that may be used to obtain said information, may be based on broadcasts of the vehicle, e.g., via the mobile communication system. Accordingly, the vehicle may be suitable for, or configured to, communicate in/via the further vehicle. For example, the vehicle, and in particular further vehicle, may be configured to communicate via one or more antennas via the mobile communication system. Additionally, the vehicle, and the further vehicle, may be configured to communicate via short-range communication, e.g., via a wireless local area network according to a variant of the IEEE 802.11 standard, via Bluetooth or via UWB.

Generating 110 the COM can be performed by a processing circuitry of the vehicle. The vehicle may be equipped with a connectivity system (CS) to deal with V2X communication. This CS may be equipped with an antenna system (AS) with one or more panels, each facing different radiating directions and composed of one or more antenna elements, which may be fed by a digitally controlled analog feeding network.

The further vehicle may aim to transmit a message to the further vehicle and may use beamforming. Further, the further vehicle may be able to perform a beam management procedure to identify the most suitable beam pair (transmitter-receiver beam configuration) among a set of beams within a beamset. The further vehicle may periodically sense the available resource(s), e.g. a set of suitable beams, the most suitable beam, etc., during a sensing window. Thus, the further vehicle may identify the available resource(s) within a resource pool, for each beam. The sensing may be performed per beam, so that a beam-based resource pool can be achieved.

Also the vehicle may periodically sense the available resource(s), e.g. a set of suitable beams, the most suitable beam, etc., during a sensing window. Thus, the vehicle may identify the available resource(s) within a resource pool, for each beam. This obtained information can be used by the vehicle to generate 110 the COM, comprising this information. The sensing may be performed per beam, so that a beam-based resource pool can be achieved. This way, a beam-based COM can be generated 110. Alternatively, a COM comprising information about a plurality of beams can be generated 110.

Transmitting 120 the COM may be performed by the CS of the vehicle. The COM may be sent via sub-6GHz bands, which may increase potential transmitters. For example, the COM can be transmitted 120/exchanged before a transmission of data from the further vehicle as an anticipation to accelerate the process of transmission. Alternatively, the COM can be transmitted 120/sent when an intention of communication is expressed by the transmitter, e.g., the further vehicle. This way, a data load can be reduced and the COM may be only transmitted 120 if needed and/or requested.

The COM may comprise a set of available and/or unavailable resources (e.g., subchannels) across the resource pool. The unavailability may have been determined by power sensing and/or control message decoding (e.g., reservation). This set of available and/or unavailable resources may be mapped to the beam with which it has been measured. The COM can contemplate all or a subset of beams within all the available beams.

The further vehicle can receive the COM. Based on the COM the further vehicle can determine whether there is an available resource to transmit information, e.g., an intentioned data packet using the received beam identified. The COM can contain data from different operating bands, so that the further vehicle can determine the most suitable band.

In an example, the COM may comprise information about two or more occupancies of two or more spatial radio channels. Thus, the further vehicle can be enabled to determine a suitable spatial radio channel based on the occupancies. This way, the further vehicle can select a desired spatial radio channel for communication with the vehicle. Thus, a likelihood that enough resource for a transmission is available can be increased.

In an example, the method may further comprise forming or selecting at least one beam for communication between the vehicle and the further vehicle via the one or more radio channel. Thus, the vehicle can determine a beam for communication with the further vehicle and vice versa, which may improve the communication, e.g., increase a signal strength. This way, the further vehicle can improve a transmission to the vehicle.

In an example, the COM may be a broadcast, groupcast or unicast message. Thus, the COM can be transmitted in an appropriated way, e.g., using a broadcast message before or a unicast message after a connection between the vehicle and the further vehicle may be established.

In an example, the method may further comprise receiving a request for communication from the further vehicle and transmitting 120 the COM in response to the request. Thus, the vehicle can transmit the COM on request, e.g., during preparation of data transmission from the further vehicle to the vehicle. For example, the request may be transmitted via V2X communication. By receiving the request the vehicle can be informed about a transmission intention of the further vehicle. Based on the request the vehicle can transmit 120 the COM, such that a data load of the mobile communication system can be reduced, since the COM may be only transmitted 120 if needed.

More details and aspects are mentioned in connection with the embodiments described above and/or below. The example shown in Fig. 1 may comprise one or more optional additional features corresponding to one or more aspects mentioned in connection with the proposed concept or one or more examples described below (e.g. Fig. 2 - 13).

Fig. 2 shows an example of a method 200 for a further vehicle. The method 200 for the further vehicle for improving communication via a radio channel with a vehicle comprises receiving 210 a COM, which comprises information about an occupancy of one or more radio channels and transmitting 220 data from the further vehicle based on the COM via the one or more radio channels. The further vehicle may be a counterpart to the vehicle as described with reference to Fig. 1. The further vehicle can be informed by the COM about an available transmission resource. This way, the further vehicle can be enabled to determine a radio channel for transmission, e.g., to schedule a transmission of data using the one or more radio channels.

In an example, the COM may comprise information about two or more occupancies of two or more spatial radio channels. Thus, the further vehicle can be enabled to decide which spatial radio channel may be most suitable for a transmission.

In an example, the method may further comprise forming or selecting at least one beam for communication between the vehicle and the further vehicle via the one or more radio channel. Thus, the further vehicle can perform beamforming, e.g. to increase a transmission efficiency.

In an example, the method may further comprise forming or selecting an alternative radio channel based on the COM and transmitting at least a part of the data via the alternative radio channel. This may enable the further vehicle to use different radio channel for parts of the information intended to transmit. Thus, the further vehicle can split the information, which may increase a transmission speed and/or may improve a workload of a mobile communication system.

In an example, the COM may be a broadcast, groupcast or unicast message. Thus, the COM can be transmitted in an appropriated way, e.g., using a broadcast message before or a unicast message after a connection between the vehicle and the further vehicle may be established.

In an example, the method may further comprise transmitting a request for receiving the COM and receiving the Com. Thus, the further vehicle can request the COM, e.g., during preparation of data transmission to the vehicle. This way, the further vehicle can reduce data traffic, since the COM may be only transmitted by the vehicle if needed.

In an example, the COM may further comprise information to enable the further vehicle to determine a position of the vehicle. Thus, the further vehicle can determine a position of the vehicle, e.g., for forming/selecting a beam without a need of further messages, which may decrease data traffic, e.g., for determining a position of the vehicle.

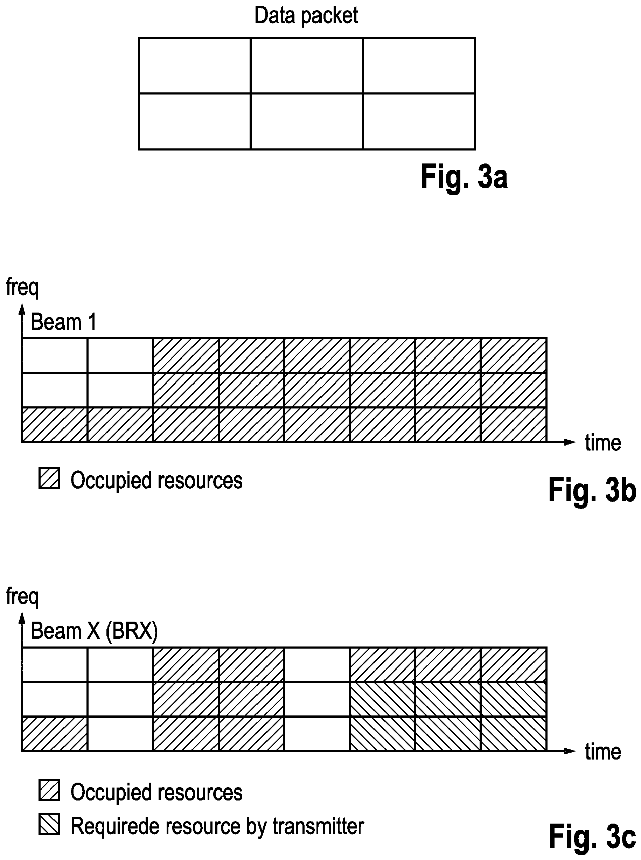

More details and aspects are mentioned in connection with the embodiments described above and/or below. The example shown in Fig. 2 may comprise one or more optional additional features corresponding to one or more aspects mentioned in connection with the proposed concept or one or more examples described above (Fig. 1) and/or below (e.g. Fig. 3-13).

Fig. 3 shows an example of a channel occupation prediction. The channel occupation prediction may be based on Collective Perception Message (CPM) and/or on Cooperative Awareness Message (CAM). Optionally, the channel occupation prediction may be based on a node map.

Fig. 3a shows an example of a data packet, which is intended to be transmitted by the further vehicle. A transmission of the data packet from the further vehicle to the vehicle can be increased by using a COM.

For example, the vehicle may periodically sense the resources (e.g., in time-frequency) to identify available and/or unavailable channels for communication. The determined information may be encapsulated in a data message. The data message may be broadcasted, e.g., via a COM. The COM may be transmitted at 5.9 GHz. For example, the COM may be broadcasted together with other messages such as CAM or CPM.

Vehicles surrounding the vehicle, including the further vehicle, may receive the COM. For example, the further vehicle may use the information for transmission immediately. Optionally or alternatively, the further vehicle may store the information for future transmission.

For example, the further vehicle may want to transmit the data packet from Fig. 3a to the vehicle.

Thus, the further vehicle may initiate a beam acquisition procedure and both the further vehicle, and the vehicle may sweep beams to identify the most suitable transmitting beam (BTX) and receiving beam (BRX) for the communication.

For example, Beam 1 as shown in Fig. 3b may have no available capacity for a transmission of the data packet. For example Beam X (BRX) as shown in Fig. 3c may have available capacity for a transmission of the data packet. The fact, that BRX has available capacity can be received by the latest COM from the vehicle. Thus, the further vehicle can select the BRX for transmission of the data packet.

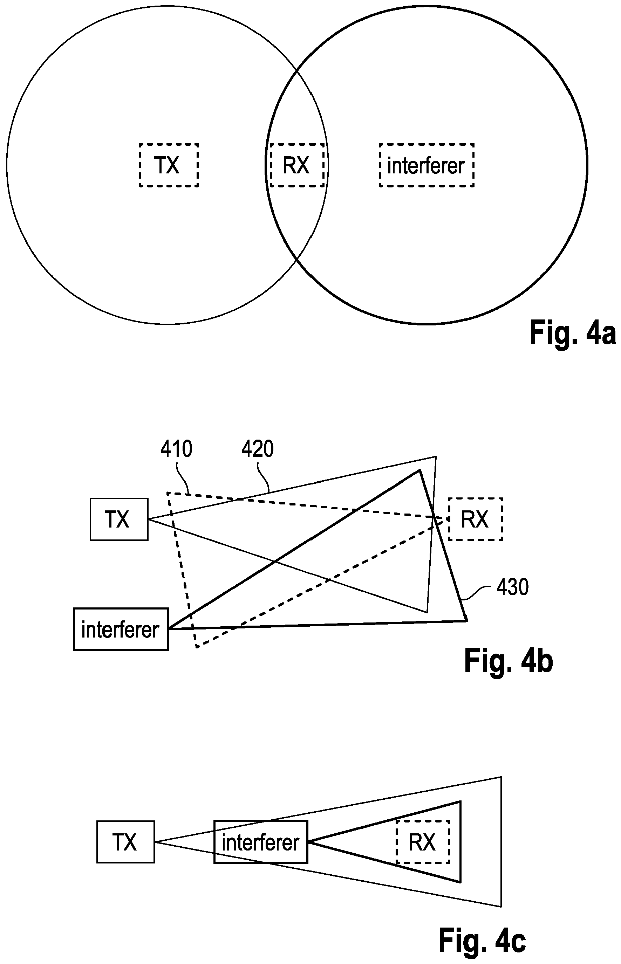

More details and aspects are mentioned in connection with the embodiments described above and/or below. The example shown in Fig. 3 may comprise one or more optional additional features corresponding to one or more aspects mentioned in connection with the proposed concept or one or more examples described above (Fig. 1 - 2) and/or below (e.g. Fig. 4 - 13).

Fig. 4 shows examples of hidden node problems. The hidden node problem is caused by missing information at a transmitter (TX), e.g., the further vehicle, about an occupancy of a radio channel of a receiver (RX), e.g., the vehicle, caused by other data transfer, e.g., caused by an interferer. For example, as shown in Fig. 4a for omnidirectional antennas, especially in sub-6 GHz, the TX has no information about the interferer, since the interferer is out of a coverage area of the TX. TX may do not sense the interferer and a packet collision is possible. This may be a problem because TX may assume that RX senses the same interferer.

However, the TX and the interferer both may want to transmit information to the RX. Thus, the RX may inform the TX based on a COM about an occupancy of one or more radio channels. This way, the RX can schedule a transmission of information based on the COM without a need for further knowledge about the interferer.

In high frequency bands with beamforming as shown in Fig. 4b with the same receiving beam 410 (dashed) the RX may cover both the TX and the interferer. Neither TX nor interferer may be capable of detecting each other. For example, the TX may be only capable to detect with its beam 420 the RX and the interferer may be only capable to detect with its beam 430 the RX, too. Thus, by transmitting the COM the RX can inform both about occupancies and/or available capacities, respectively.

Fig. 4c shows an example in which the TX may be not capable of knowing if the RX beam will be occupied by an interferer. This case may happen on a highway.

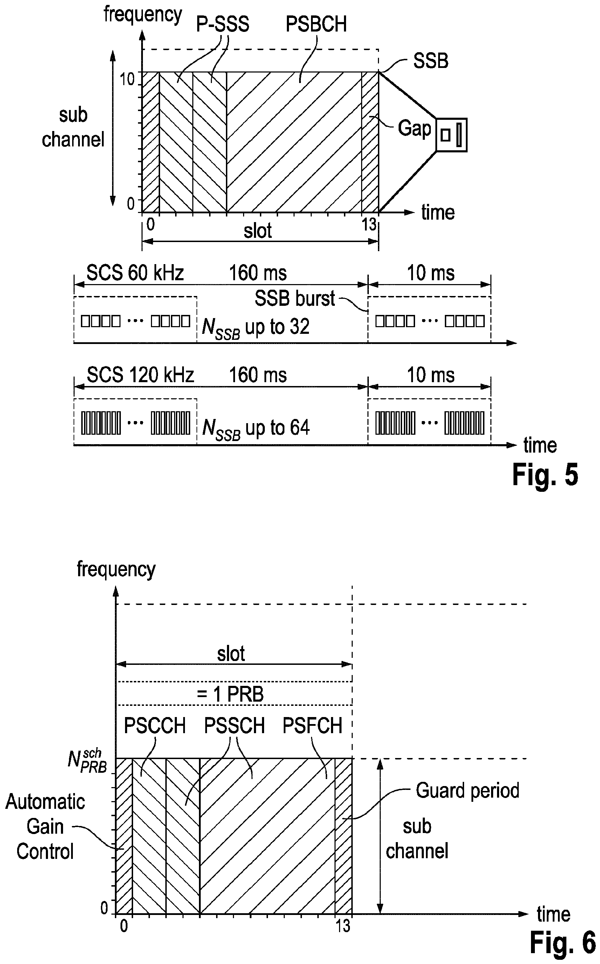

More details and aspects are mentioned in connection with the embodiments described above and/or below. The example shown in Fig. 4 may comprise one or more optional additional features corresponding to one or more aspects mentioned in connection with the proposed concept or one or more examples described above (Fig. 1 - 3) and/or below (e.g. Fig. 5 - 13).

Fig. 5 shows a SS Burst and S-SSB structure in NR V2X SL.

Cooperative Connected and Automated Mobility (CCAM) is expected to leverage the full potential of wireless communications. With the growing adoption of 5G and its support of Vehicle-to-Everything (V2X) communications, beamformed vehicular communications at millimeter-wave (mmWave) bands are expected to enable the most demanding connected driving applications. Beamformed V2X links present the challenge of beam management in such a fast-changing scenario.

Practical limitations of the 5G V2X stack to support successful beamforming procedures and two beam management strategies are shown below. Both strategies are evaluated in terms of power performance, beam recovery time and channel usage. The results suggest that significant differences apply when the beam is more frequently updated, whereas little improvement is seen by increasing the size of the beamset. Also, the selection of a proper strategy is shown to be important to alleviate the channel from overheads, and substantial differences in required signaling can be seen depending on the beam-tracking approach.

5G NR introduced in 3GPP Release 14 support for analog beamforming at both the base station and the UE with the so-called beam management procedures. Forecasting the need for sharp steerable beams, pertinent to maintain links operating at the mmWave band, beam management comprises a set of features to align the beams at both ends and ensure link stability. The procedures include the following aspects:

- Beam determination: selection of a suitable beam at one or both ends of the link.
- Beam measurement: allowing both ends to measure the characteristics of the received beamformed signals.
- Beam reporting: whereby beam measurement information is fed back to the transmitter.
- Beam sweeping: covering an angular sector by switching to different analog beams over the area.

These features allow acquiring enough information to determine proper beam pairs (i.e., aligned transmitting and receiving beams) along a data session with low-layer signaling.

Even though the 3GPP does not state unambiguously the specific method to perform beam management, the following procedures - described in - are supported:

- P-1: specially used to find initial beam pairs, a beam sweep at the transmitter is performed to select one or more transmitting and (if possible) receiving beams.
- P-2: once a beam pair is determined, a smaller set of beams from the transmitter can be swept over a reduced angular region to maintain the link. If needed, this smaller set can consist of narrower beams - a process also known as beam refinement.
- P-3: focused on beam determination at the receiver side, a previously-determined transmitting beam is fixed during a receiver beam sweep.

Note that in each of the procedures, one or more suitable beam measurements can be reported to increase robustness against beam failure, thereby a fast recovery can be triggered upon blockage, misalignment or outage. Nevertheless, some of these procedures are meant to be done periodically, while others (such as beam refinement) can be triggered if conditions allow it. It is therefore worth considering the overheads produced by the required signaling, and aim for a trade-off between perfect, sharp beam alignment and coarse beam pairing to alleviate channel congestion.

The support of NR for mmWave frequencies and beamforming entails defining reference signals that allow beam management procedures.

To perform initial access and synchronization between UE and BS, NR makes use of the SS Block, or SSB as shown in Fig. 5. Initially conceived for DL, an SSB spans 4 OFDM symbols in time and 240 subcarriers in frequency. It comprises the PSS, the SSS, as well as the PBCH and its associated DMRS .

In order to suit for beam management SSBs can be beamformed, and therefore, the 3GPP defines the so-called SS bursts, where a number of SSBs ($N_{SSB}$) can be transmitted to measure different beam pair combinations. Currently, the specifications support up to $N_{SSB}$ = 64 per burst for mmWave bands, which are grouped in the first 5 ms (half frame) of the SS burst periodicity ($T_{SS}$). This potentially allows encapsulating 64 different beam measurements in 5 ms, in a process that can be periodically repeated every $T_{SS}$ = {5,10,20,40,80,160} ms.

The CSI framework in NR is a complex scheme by which UEs can perform channel measurements and report relevant information for link configuration. In DL, base stations send UEspecific CSI-RS with a high level of flexibility regarding its resource mapping, number of ports, and periodicity, and thus CSI-RS can be allocated virtually anywhere within the resource pool. Upon reception, the receiver measures the signals to issue a CSI report.

CSI-RS can also be beamformed to different angular regions providing a complementary, yet more flexible mechanism for beam management operations. As a result, CSI-RS can be used to perform additional beam searches during the remaining time between SS bursts. CSI-RS resources can be linked to the previous SSB, which can be convenient to update coarse beams in a surrounding reduced angular space, to trigger beam refinement, or even perform another full beam sweep in between. As such, CSI is indeed responsible of reporting which beamformed SSBs and CSI-RS resources have resulted in better received power in the measurements.

Although NR V2X allegedly supports the same frame structure and spectrum options as those established for downlink/uplink communications, the procedure to manage beamformed links in SL remains unspecified. This study aims to elucidate some of the main limitations that SL will experience for beam management aspects and also evaluate suitable strategies and configurations based on these constraints.

One concern that was raised with LTE-based V2X was the quick loss in reliability when tens of vehicles where simultaneously sharing the 10 MHz channel reserved for ITS at 5.9 GHz. To increase resilience against interference, a need for additional bands for V2X was expressed by several studies in the field . At the same time, the use cases defined for future V2X easily made LTE V2X and the 5.9 GHz ITS band to fall short at fulfilling the requirements imposed by the industry. As a result, it is agreed that NR V2X should support both licensed and unlicensed ITS bands for SL operation. Access to any band can be orchestrated by base stations in a time division fashion, except when nodes are out-of-coverage and have to schedule autonomously their transmissions. This latter case has been particularly relevant in the design of LTE V2X at 5.9 GHz, but with the introduction of NR V2X this scheduling can extend to new bands. In this line, mmWave bands such as the 30 GHz and 63 GHz bands have been object of study by 3GPP , as they not only provide enough bandwidth to support some of the most demanding use cases, but also face the challenge of autonomous resource allocation at these frequencies.

The frame structure in NR V2X SL follows the same principles of NR. Resources are divided in PRBs, which consist of 12 subcarriers in frequency and a slot (14 OFDM symbols) in time. Numerologies determine the subcarrier spacing *(SCS)*, which relates to the slot duration ($T_{slot}$) in an anti-proportional manner . At mmWave, $SCS^{\mu}$ = {60,120} kHz are supported, making each PRB to span $T_{slot}^{\mu} = \{0.25, 0.125\}\,\text{ms}$ , respectively.

Adopting the resource grid used in NR allows for flexible resource allocation. In SL, the building block for this grid is a subchannel, which is a slot-long cluster of $N_{PRB}^{sch} =$ {10,12,15,20,25,50,75,100} PRBs. It is thus worth noting that subchannel bandwidth will depend on numerology, but following the aforementioned anti-proportionality, when fewer subchannels can be accomodated in the available bandwidth, more slots will fit within a frame (10 ms).

With this arrangement, nodes using autonomous resource selection sense the available subchannels during a sensing window and determine which subchannels are unavailable for transmission, either by measuring an unacceptable level of interference (over a dynamic threshold) or by decoding the SCI of incoming transmissions, in which future resource reservations by other UEs are indicated. Then, resource selection by the sensing UE depends on multiple factors, as NR V2X supports both periodic and aperiodic traffic, as well as the newly introduced feedback-assisted unicast and groupcast. Generally, this resource selection will eventually depend on the priority and QOS requirements of the packet to be delivered, and therefore each UE will modulate its resource selection based on service requirements and whether the CR exceeds a certain threshold for congestion control. Note that beamforming drastically reduces the interference spread over unwanted directions, so mmWave SL will inherently experience higher CR alleviation that its sub-6 GHz counterpart, fostering greater spatial re-use of the time-frequency resources.

As suggested beam management should be supported in NR V2X using NR mechanisms as baseline. As such, both S-SSB and CSI-RS should be used for beam sweeping and CSI reports must provide the necessary feedback for beam alignment.

Synchronization in SL is structured to unify the resources occupied by SS bursts across all supported bands. As NR V2X might need to co-exist with LTE V2X at some bands, the 10 MHz channel bandwidth - relevant in LTE V2X - is to be supported, and thus 11 PRBs (132 subcarriers) is established as the frequency scope for all NR V2X S-SSB . The slot structure of each S-SSB to accomodate S-PSS, S-SSS and PSBCH is depicted in Fig. 5. Using this structure, it is specified that up to $N_{SSB}$ = 64 for 120 kHz *SCS* (up to 32 for 60 kHz *SCS)* can be encapsulated within an SS burst in a 10 ms window . Finally, as also shown in Fig. 5, consecutive SS bursts are transmitted with a periodicity that is fixed to $T_{SS}$ = 160 ms in SL .

More details and aspects are mentioned in connection with the embodiments described above and/or below. The example shown in Fig. 5 may comprise one or more optional additional features corresponding to one or more aspects mentioned in connection with the proposed concept or one or more examples described above (Fig. 1 - 4) and/or below (e.g. Fig. 6 - 13).

Fig. 6 shows a slot and resource grid structure in NR V2X SL.

The SS burst periodicity limits the ability of performing SS-based beam sweeps to 160ms. Although the configurability of this parameter is suggested to be supported , complementary beam determination and refinement can be realized by CSI-RS in SL. As illustrated in Fig. 6, the slot structure in NR V2X is designed to accommodate the PSSCH, the PSCCH and the PSFCH in a single subchannel. While PSCCH and PSFCH are used for general control information, resource reservation, and HARQ feedback control, and are not necessarily present in all the PRBs that form a subchannel ; CSI-RS signals and the corresponding CSI reports are always allocated in the PSSCH . The CSI-RS only supports 1 or 2 antenna ports, and an average of one resource element per PRB , assuming CSI-RS will extend across each PRB within the subchannel. CSI reports, here as well, will provide feedback to the transmitter to indicate those resources most suitable for optimum reception. For example, the feedback can be provided by transmitting a COM.

As a proof-of-principle two traffic scenarios are modelled for the evaluation, Manhattan (urban) and highway, according to the evaluation methodologies of 3GPP for V2X. The properties of each scenario are summarized in Tab. 1. To obtain realistic vehicle distributions across the scenarios, vehicles are dropped in SUMO tool so that the distance between new vehicles in the same lane corresponds to a safety distance proportional to the lane speed. Vehicle dropping thus follows an exponential probability distribution where the mean time gap between consecutively dropped vehicles is 2 s at the lane speed. In the simulation, dropped vehicles interact with each other following basic traffic rules.

Tab. 1: Configuration of vehicular traffic modelling for the case scenarios under evaluation.

|  | Urban | Highway |
|---|---|---|
| Description | 9 blocks of Manhattan Grid | Two-way highway |
| Lanes | 2 in each direction | 3 in each direction |
| Lane width | 3.5 m | 4 m |
| Grid size | 433 m x 250 m | N/A |
| Simulation area | 1299 m x 750 m | 2000 m |
| Vehicle velocity | 60 km/h Going straight: 50% | 80/100/140/40/30/20 km/h |
| Intersection turn probability | Turning left: 25% Turning right: 25% | N/A |

Vehicles in the simulation carry a mmWave antenna system with four antenna panels operating in the n257 5G band (26.50 - 29.50 GHz). Each panel sectorizes the azimuth plane in a way that each one faces its corresponding 90° sector - for convenience: the front, back and sides of the vehicle. The panels consist of multi-element antenna arrays with beamforming capabilities designed to cover the steering range required for each sector ($\pm45°$).

As V2V links occur in the same elevation plane, the antenna arrays in this calculation have a single vertical element, whereas the required steering range in azimuth is covered with $N_{ant}$ horizontally arranged elements. Each panel operates with a pre-configured beamset with $N_c$ coarse beams and $N_f$ fine beams. The fine beams are formed with a generalized DFT codebook with an offset of $-(1 + N_{ant})/2$. The weights for analog beamforming for each of these beams ($\mathbf{u}_i$) is expressed as:

$$\mathbf{u}_i = \frac{1}{\sqrt{N_{ant}}} \left[ e^{-j\frac{2\pi}{N_f}\left(i-\frac{N_f+1}{2}\right)}, \; e^{-j\frac{2\pi}{N_f}2\left(i-\frac{N_f+1}{2}\right)}, \right.$$
$$\left. \ldots, \; e^{-j\frac{2\pi}{N_f}N_{ant}\left(i-\frac{N_f+1}{2}\right)} \right], \qquad (1)$$

where $i = 1,2,...,N_f$ and, depending on the oversampling ($O$) of the codebook, the number of fine beams is $N_f = ON_{ant} + 1$. This method quantizes the angular space and uniformly covers the steering range. Coarse beams are then formed by combining fine beams in a hierarchical fashion. By assuming a fully-connected hybrid beamforming architecture with $N_{RF}$ RF ports, $N_{RF}$ beams can potentially be combined to create increasingly wide beams. The antenna system thus combines fine beams into coarser widths using:

$$\mathbf{v}_k = \frac{1}{\sqrt{N_{RF}}} \sum \mathbf{u}_p \, e^{jw_o p} \, , (2)$$

where $k = 1,2,..., N_c$. Here, $p$ denotes the indices of each of the contiguous fine beams being combined. The parameter $w_o$ is optimized for each different $N_{RF}$ value so that the gain ripple of the aggregated radiation pattern is minimized.

The channel modeling is performed for the vehicular scenarios detailed in Tab. 1. The linklevel interactions are calculated by means of the QuaDRiGa tool for the vehicle trajectories initially obtained in SUMO. The channel response is the result of GBSCM simulation based on the specifications of the 3GPP. GBSCM provides a trade-off between repeatability, generalization and accuracy. Purely stochastic models suffer from a lack of physical meaning and some spatial information is lost, whereas ray tracing tools offer a highly accurate channel model at the expense of very time consuming calculations. In addition, the latter reduces the applicability of the results to the specific scenario under study and it is constrained to the realism of the actual model.

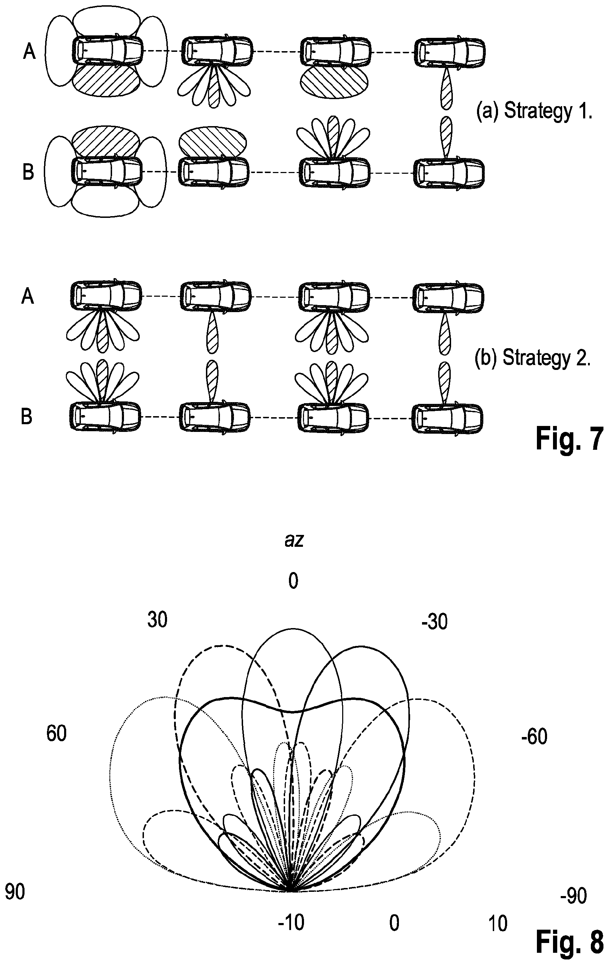

More details and aspects are mentioned in connection with the embodiments described above and/or below. The example shown in Fig. 6 may comprise one or more optional additional features corresponding to one or more aspects mentioned in connection with the proposed concept or one or more examples described above (Fig. 1 - 5) and/or below (e.g. Fig. 7 - 13).

Fig. 7a-7b show proposed beam management strategies for V2V beamforming.

Different visibility conditions between vehicles are considered following the abovementioned recommendations: LOS, NLOS (building blockage) and NLOSv (LOS path blocked by one or more vehicles). The QuaDRiGa channel calculations defines a set of arbitrary multipath radio channels by determining some initial settings with stochastic models, whereas the particular contributions of the scattering clusters are computed with the addition of various rays with individual angular and temporal features based on GBSCM.

In this study two beam management strategies constrained to the aforementioned tools provided by NR-V2X are compared to assess which one might be more suitable for V2V scenarios. A set of vehicle pairs in the scenario are linked and the strategies are evaluated by measuring the power received by each of the target nodes during the simulation time, being the results affected by visibility conditions and channel selectivity phenomena. The following strategies, and their underlying power profiles, are measured for the linked vehicle pairs under evaluation:

- **Reference (R). Perfect beam-alignment:** all the fine beam combinations for both vehicles are measured every simulation snapshot and the beam pair that provides the maximum RSRP is always chosen.
- **Strategy 1 (SG1). Coarse anchoring and refinement:** Every $T_{SS}$ a SS burst measures all coarse beam combinations for both vehicles and defines a coarse anchor. Then, $K_{CSI}$ CSI bursts are performed between SS bursts for each node, where a subset of $1 + N_{ngh}$ fine beams from the transmitter are measured using the coarse anchor from the receiver end, as shown in Fig. 7a. The transmitting fine beam that provides the maximum RSRP is chosen. The same process is also performed inversely $K_{CSI}$ times to choose the most suitable receiving fine beam.
- **Strategy 2 (SG2). Fine tracking:** Both S-SSB and CSI are used to measure fine beams. Every $T_{SS}$ and $K_{CSI}$ times inbetween both nodes measure all combinations of a subset of $1 + N_{ngh}$ fine beams, as shown in Fig. 7b. The beam pair that provides the maximum RSRP is chosen until the next measurement. The initial beam is determined by a full sweep.

These two strategies exemplify two different approaches to tackle beam management in V2V scenarios. Both strategies aim to maintain a beamformed link with fine beams, yet present significant practical differences regarding stability, resource utilization and failure recovery. The reference signal is assumed as the maximum achievable power performance between the nodes. However, as it is unfeasible resource-wise to perform the reference measurement, the proposed strategies make use of ($N_{ngh}$) neighbor beams. When used, this subset of beams takes the previously chosen fine beam (from the previous measurement) and $N_{ngh}/2$ contiguous beams within the beamset at each side.

The proposed strategies have been evaluated in terms of power performance and channel usage. In Tab. 2 the configuration parameters used for the simulation are detailed.

Tab. 2: Parameters used for the Simulation

| Parameter | | Value |
|---|---|---|
| Transmission power | $P_{tx}$ | [0, 23] dBm |
| Channel model | | 3GPP 37.885 [18] |
| Number of panels | | 4 |
| Combined RF ports | $N_{RF}$ | 1 (fine), 3 (coarse) |
| Antennas per panel | $N_{ant}$ | 4 |
| DFT Oversampling | O | 1 |
| Fine beams per panel | $N_f$ | 5 |
| Coarse beams per panel | $N_C$ | 1 |

(continued)

| Parameter | | Value |
|---|---|---|
| Aggregated pattern flattening | $\omega_o$ | 5.75 |
| Simulation time | | 120 s |
| Central frequency | F | 28 GHz |
| Bandwidth | BW | 50, 100, 200 MHz |
| Subchannel size | $N^{sch}_{PRB}$ PRB | 10 PRB |
| Number of neighbors | $N_{ngh}$ | 4, 6, 8, 10 |
| Number of CSI bursts | $K_{CSI}$ | 1,3 |

More details and aspects are mentioned in connection with the embodiments described above and/or below. The example shown in Fig. 7 may comprise one or more optional additional features corresponding to one or more aspects mentioned in connection with the proposed concept or one or more examples described above (Fig. 1 - 6) and/or below (e.g. Fig. 8 - 13).

Fig. 8 shows a radiation pattern for the beamset used in the evaluation (Directivity [dB]).

The performance of both strategies has been measured for different configuration parameters. The power profile for each pair of nodes is compared with the reference beam alignment strategy in order to evaluate the overall performance of the proposed strategies. A two-level hierarchical beamset is built using $N_{ant}$ = 4 antenna elements per panel, using 1 port for the fine beams and 3 ports for the coarse beams. The resulting pre-configured beamset for one panel, which is replicated and rotated to face the sector of each corresponding panel, is shown in Fig. 8. The resulting beams have a directivity of 12 dB and 7.9 dB for the fine and coarse configurations, respectively. The coarse beam has a half-power beamwidth of 94°, covering the whole sector, whereas the half-power beamwidth for the fine beams ranges from 24° to 35°, being sharper in the broadside. The most steered beams in neighboring panels overlap so that the panel switching is less frequent when the steering angle is at the edge of the steering range. A total of 5 fine beams and 1 coarse beams result from the calculations in (1) and (2), thus accounting for a total of 20 fine beams and 4 coarse beams using all panels.

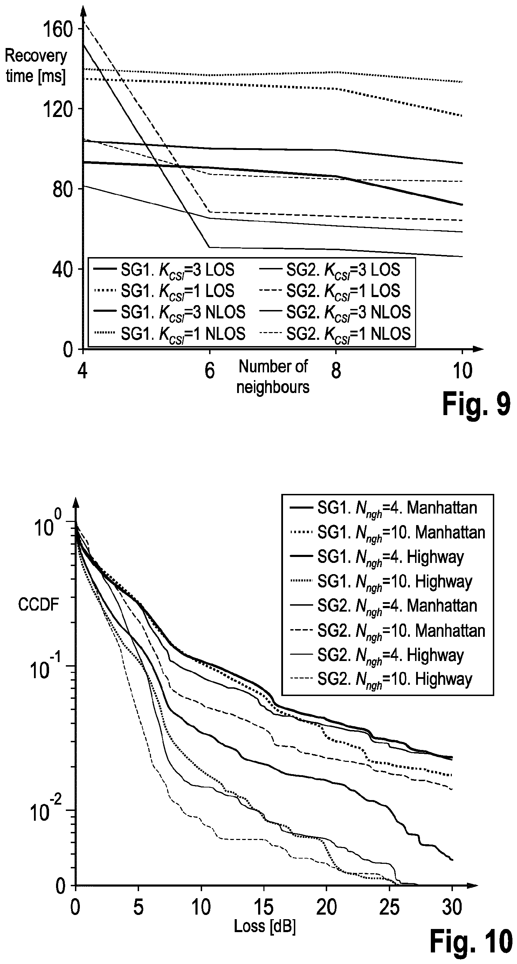

More details and aspects are mentioned in connection with the embodiments described above and/or below. The example shown in Fig. 8 may comprise one or more optional additional features corresponding to one or more aspects mentioned in connection with the proposed concept or one or more examples described above (Fig. 1 - 7) and/or below (e.g. Fig. 9 - 13).

Fig. 9 shows a mean recovery time of beam management strategies for different number of neighbors in LOS and NLOS visibility conditions.

From this beamset the beam management strategies are evaluated using different number of neighbors ($N_{ngh}$ = {4,6,8,10}). In Fig. 9, the mean time it takes for each configuration to recover from a misalignment is illustrated for the Manhattan scenario, where both LOS and NLOS visibility conditions are given. This recovery time is extracted from the instant at which the power profile deviates from the reference and ends when the strategy finds the same beam as the reference. Here, two values for $K_{CSI}$ are considered. As CSI-based beam trainings occur in-between SSB burst, the $K_{CSI}$ values being compared, 1 and 3, can be translated to a mean beam update rate of 80 ms and 40 ms, respectively. As seen in Fig. 9, the dashed lines correspond to a slower update and thus an increase in the mean recovery rate is shown in every situation. Strategy 2 exhibits higher resilience to misalignment, as an increase in update rate only delivers a mean of 15.9 ms less recovery time in LOS conditions and 23.4 ms in NLOS conditions. Conversely, Strategy 1 sees its recovery time improved from 38 ms to 42.9 ms when switching to a more frequent beam update rate, around twice the time compared to SG1. It is worth noting that none of the strategies gets severely impaired in terms of beam recovery when visibility conditions worsen, and NLOS conditions remain comparable to LOS in all cases.

From Fig. 9 it can also be seen how none of the configurations exceed 160 ms of sustained misalignment. This might appear obvious for SG1, as a full coarse beam search is performed every 160 ms, but also gives merit to SG2, which has no mechanism to ensure certainty about the fact that the chosen beam is the optimum one. As for the number of neighbors, none of the considered configurations gets close to a perfect beam alignment, so full misalignment prevention may require more aggressive strategies. Nevertheless, all configurations at least appear to stabilize with a less ambitious beamset size. SG1 shows little improvement when changing from 4 to 10 neighbors. SG2 presents nonetheless a noticeable improvement when more than 6 neighbors are used, and it presents in this situation the best performance in terms of beam recovery.

To properly evaluate the damage exerted over the link quality due to the misalignment, the loss in power with respect to the reference profile is calculated for both strategies. In Fig. 9, the loss dimension when the strategies' power profiles deviate from the reference is shown. To visualize this loss, the complementary cumulative distribution function (CCDF) of the experienced losses for all vehicles is deemed convenient to evaluate which potential losses each strategy would experience. In Fig. 9, a noteworthy difference between scenarios can be seen, which can be due to the variability of the required pointing angles. Links in a Manhattan scenario may experience a wider range of potential angles of arrival in the same data session, whereas links in a highway scenario require less frequent beam switch. This increased beam update requirement in the Manhattan scenario, when handled by practical beam update rates and manageable beamsets, provides an increase in losses, as in some maneuvers the optimum beam quickly deviates from the one being used.

In these results, 70% of the time the loss stays below 3 dB which, according to the ripple in the aggregated fine pattern, can be seen as if the chosen beam is generally the optimum one or one consecutive neighbor. Although this loss can be acceptable in normal operation, it is also important to consider the loss experienced at a low probability as it will eventually extrapolate to reliability at link level. When CCDF=$10^{-1}$, the loss observed in Fig. 9 is exceeded 10% of the time. SG1 presents then a 10% probability of exceeding a 10.9 dB power loss with $N_{ngh}$ = 4 and 10.5 dB with $N_{ngh}$ = 10 in the Manhattan scenario, and this margin when using different $N_{ngh}$ slightly increases for the highway scenario - which ranges from 6.0 dB to 5.3 dB, respectively - consolidating further its independence from the number of neighbors. SG2 presents less power loss with the same probability, with 8.2 dB for the Manhattan scenario and 5.4 dB in highway for the case with 4 neighbors, a value that decreases uniformly around 1.5 dB when $N_{ngh}$ = 10. Again, the increase in $N_{ngh}$ makes a noticeable impact on SG2 performance. It is also worth paying attention to the data when it approximates the 1% threshold. For the highway scenario - allegedly the best performing one - switching from 10 to 4 neighbors increases the 1% probability-conditioned loss more than 10 dB for SG1 and around 6 dB for SG2, and the losses quickly reach over 30 dB for the Manhattan scenario; a marginally-occurring but decisive loss that can severely impair the link down to outage and might be critical when aiming for negligible error rates.

More details and aspects are mentioned in connection with the embodiments described above and/or below. The example shown in Fig. 9 may comprise one or more optional additional features corresponding to one or more aspects mentioned in connection with the proposed concept or one or more examples described above (Fig. 1 - 8) and/or below (e.g. Fig. 10 - 13).

Fig. 10 shows a loss complementary cumulative distribution of beam management strategies in different traffic scenario for $N_{ngh}$ = {4,10} and LOS conditions.

One relevant difference between the proposed strategies is the need for resources. SG1 is able to measure fine beams against a coarse anchor beam previously established, every CSI burst consists of 1 + $N_{ngh}$ measurements and thus 2 x (1 + $N_{ngh}$) CSI resources are required to obtain a fine beam pair. Conversely, by using SS bursts also for fine beam tracking, SG2 needs to attempt all fine combinations every measurement, requiring (1 + $N_{ngh}$)$^2$ CSI resources and therefore having exponentially increasing resource needs.

To measure the resource usage of each strategy, the interference sensed by receiving vehicles is calculated in a scenario where all vehicles are performing the same strategy. The traffic model in the highway scenario has been slightly modified to showcase an extreme case with very high vehicle density, in a way that all vehicles are separated with a safety time gap of 2.5 s. The parameter used to compare resource usage is the CUR, which represents the extent to which the channel is utilized by the occupied resources conditioned to the receiving beam in each case. Each link pair exchanges data with medium traffic intensity, which according to implies a 20% and 80% chance of generating a 1.2 kbyte and 0.8 kbyte payload, respectively, with a 30 ms inter-packet reception rate; and also exchange the S-SSB and CSI resources required to align their beams. CUR is thus calculated, for a 100 ms window, by measuring PRB-wise the intended data exchange and the sensed interferences captured by the receiving beam for each vehicle, and then averaging the sensed channel usage for all the vehicles with respect to the total resource pool capacity.

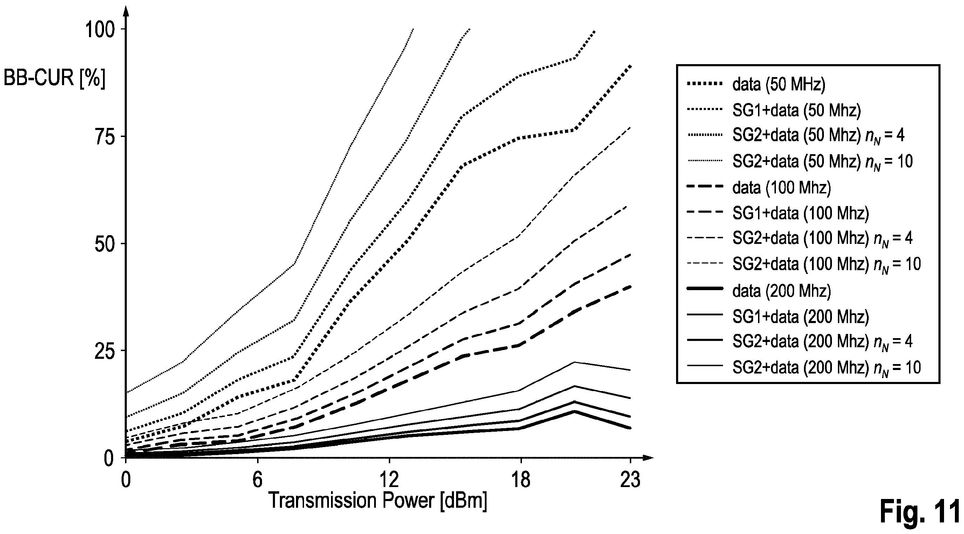

More details and aspects are mentioned in connection with the embodiments described above and/or below. The example shown in Fig. 10 may comprise one or more optional additional features corresponding to one or more aspects mentioned in connection with the proposed concept or one or more examples described above (Fig. 1 - 9) and/or below (e.g. Fig. 11 - 13).

Fig. 11 shows a beam-based Channel Usage Ratio (BB-CUR) for medium intensity data traffic and the resources needed by the proposed strategies, compared for different total channel bandwidths (BW) and number of neighbors ($N_{ngh}$).

The share of the channel used when all the vehicles exchange data with the proposed strategies is shown in Fig. 11. Here, the CUR occupied by the data traffic with and without the overheads associated with each strategy is presented for different channel bandwidth options ($BW$ = {50,100,200} MHz) and transmission power ($P_{tx}$). The power transmitted, which is homogenized across the entire simulation for simplicity, affects the extent to which each radiated signal spans in space and therefore increases the coverage of an interferring wave. CUR appears to increase linearly with the configured transmission power, yet at different rates depending on the total channel bandwidth. Indeed, our CUR results for only data can be fairly approximated by BB-CUR [%] $\simeq$ 9.5 Ptx [dBm] e-0.02 BW[MHz]. The usage ratio when the strategies are used together with data increases considerably, and especially in the 50 MHz case none of the strategies would support the largest configurable $P_{tx}$ without exceeding the total pool capacity.

In these results, SG1 curves for different $N_{ngh}$ are almost equal and an average of all $N_{ngh}$ configurations is presented in Fig. 11. A data exchange using SG1 uses a smaller share of the channel compared to any of the evaluated SG2 configurations. Although how CUR relates to the final link reliability is left out of the scope of this evaluation, some practical limits found in the literature can be applied to the study. A usage ratio up to 80% might be reasonable for broadcast links with relaxed reliability requirements. However, for unicast/groupcast links where link reliability can be a stringent demand for some applications, the channel usage ratio must be significantly reduced. In this cited study, a usage ratio of 33.6% is used as an acceptable bound for reliable data exchange, based on results. Accordingly, such a threshold is easily surpassed in most of the evaluated cases, and the maximum power cannot be used for transmission. Only in the 200 MHz configuration, CUR stays below 25% regardless of the strategy. However, for smaller channel bandwidths, the maximum $P_{tx}$ that may be used in SG2 is from 2 dB to 4 dB lower to that of SG1, with the underlying loss in coverage for the same CUR.

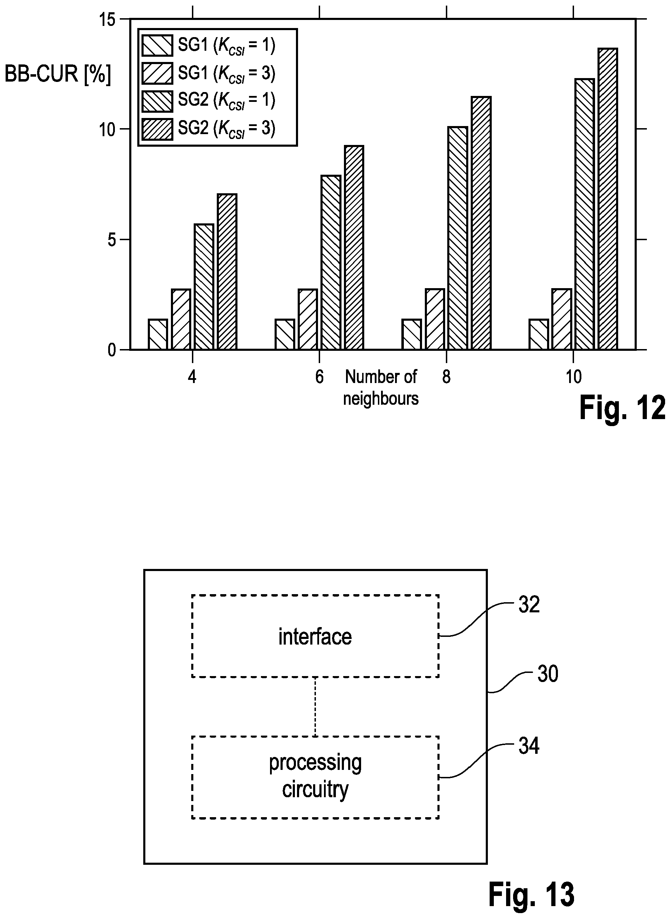

More details and aspects are mentioned in connection with the embodiments described above and/or below. The example shown in Fig. 11 may comprise one or more optional additional features corresponding to one or more aspects mentioned in connection with the proposed concept or one or more examples described above (Fig. 1 - 10) and/or below (e.g. Fig. 12 - 13).

Fig. 12 shows a beam-based Channel Usage Ratio (BB-CUR) of the resources needed by the proposed strategies for different $K_{CSI}$, transmission power of 23 dBm and 200 MHz bandwidth.

A closer look to the effects of the strategies on channel occupancy can be seen in the slice shown in Fig. 12. Here, the maximum transmission power is used ($P_{tx}$ = 23 dBm) to exemplify the highest levels of CUR. Channel usage is not significantly affected by the increase of CSI bursts, and CUR increases less than 2 percentage points when the beam is more frequently updated. The number of neighbors does however affect SG2. While $N_{ngh}$ makes negligible increments for SG1, the CUR for SG2 increases linearly and is twice as high for 10 neighbors compared to 4. SG2 presents always the largest values of CUR, even for 4 neighbors, where the channel usage is 4 times the one experienced in SG1 in the $K_{CSI}$ = 3 case.

The use of multi-element antenna systems in vehicles stands as a promising enabler for the most demanding driving applications foreseen in the connected and automated future of transportation. The millimeter wave band and its large available bandwidths will be the next step to support the most data-hungry services, however the use of beamforming to target surrounding V2X nodes might be essential to overcome the propagation hurdles at these bands. Handling rapidly variant vehicular scenarios is nonetheless cumbersome when the beams between connected pairs need to be continuously aligned, and therefore a framework for beam management in vehicular scenarios should be considered to advance in the field. In this paper the possibilities for beamformed vehicular communications with the currently specified NR-V2X mechanisms are described. With these considerations, two beam management strategies have been proposed, inspired by conventional procedures used today for links with the base station. The strategies are analyzed in terms of power performance - addressing time and power loss related issues - and channel usage, materialized here as the Beam-based Channel Usage Ratio (BB-CUR).

The proposed strategies differ fundamentally in the approach to maintain the optimum beam pair from a subset of beams, either by establishing a wide-beam anchor and refining (Strategy 1) or by constantly measuring a subset of sharp beams (Strategy 2). The latter appears to show reduced power loss and beam recovery time than its non-anchored counterpart with a relatively small beamset size; whereas both approaches see these metrics improved when beams are more frequently updated.

Although operating just with fine beams (Strategy 2) presents the best performing power metrics, Strategy 1 remains stable regardless of the beamset size, so having a coarse anchor beam appears to give predictable results unless this one deviates from the optimum. When the resource usage of each configuration is assessed, attempting to measure all beam combinations within a beamset quickly becomes unwieldy, and the channel occupancy of the required signaling outweighs the benefits in power performance obtained with this apparently more agile strategy. As resource-intensive configurations will become unfeasible for small channel bands, the stability and low usage here exhibited by the anchored strategy may turn into the only option when high reliability is pursued. As the results suggest, resource usage appears more dependent on the angular span of the beamset being used than on the measurement rate performed by the training pairs.

More details and aspects are mentioned in connection with the embodiments described above and/or below. The example shown in Fig. 12 may comprise one or more optional additional features corresponding to one or more aspects mentioned in connection with the proposed concept or one or more examples described above (Fig. 1 - 11) and/or below (e.g. Fig. 13).

Fig. 13 shows a block diagram of an apparatus 30. The apparatus 30 comprises one or more interfaces 32 configured to communicate with a communication device or user equipment. The apparatus 30 further comprises processing circuitry 34 configured to control the one or more interfaces 34 and to perform the method for the vehicle as described above (e.g., described with reference to Fig.1) or the method for the further vehicle as described above (e.g., described with reference to Fig. 2).

For example, the apparatus 30 can be comprised by a vehicle. For example, the vehicle may be a land vehicle, such a road vehicle, a car, an automobile, an off-road vehicle, a motor vehicle, a bus, a robo-taxi, a van, a truck or a lorry. Alternatively, the vehicle may be any other type of vehicle, such as a train, a subway train, a boat or a ship. For example, the proposed concept may be applied to public transportation (trains, bus) and future means of mobility (e.g., robo-taxis).

As shown in Fig. 13 the respective one or more interfaces 32 are coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34.

In an embodiment the apparatus 30 may comprise a memory and at least one processing circuitry 34 operably coupled to the memory and configured to perform the below mentioned method.

In examples the one or more interfaces 32 may correspond to any means for obtaining, receiving, transmitting or providing analog or digital signals or information, e.g., any connector, contact, pin, register, input port, output port, conductor, lane, etc. which allows providing or obtaining a signal or information. An interface may be wireless or wireline and it may be configured to communicate, e.g., transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

More details and aspects are mentioned in connection with the embodiments described above. The example shown in Fig. 13 may comprise one or more optional additional features corresponding to one or more aspects mentioned in connection with the proposed concept or one or more examples described above (Fig. 1 - 12).

The aspects and features described in relation to a particular one of the previous examples may also be combined with one or more of the further examples to replace an identical or similar feature of that further example or to additionally introduce the features into the further example.

Examples may be compliant to or even comprised in certain standard specifications, such as those specified by the 3GPP. Configuration information may for example be communicated using signaling radio bearers, e.g. by means of Radio Resource Control (RRC) messages, which are, for example, specified in the *.331 series of 3GPP as layer 3 control plane messages. For example, physical layer specification, e.g. by means of Doppler Delay Resolutions and other physical layer specifications may also be affected by present embodiments, e.g., *.201, *.211, *.212, *.213, *.214, *.216 series in the 3GPP specifications.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (100) for a vehicle for improving communication via a radio channel, comprising

   generating (110) a channel occupation message, COM, which comprises information about an occupancy of one or more radio channels; and
   transmitting (120) the COM to a further vehicle.

2. The method (100) according to claim 1, wherein
   the COM comprises information about two or more occupancies of two or more spatial radio channels.

3. The method (100) according to any of the preceding claims, further comprising forming or selecting at least one beam for communication between the vehicle and the further vehicle via the one or more radio channel.

4. The method (100) according to any of the preceding claims, wherein
   the COM is a broadcast, groupcast or unicast message.

5. The method (100) according to any of the preceding claims, further comprising receiving a request for communication from the further vehicle; and
   transmitting the COM in response to the request.

6. A method (200) for a further vehicle for improving communication via a radio channel with a vehicle, comprising

   receiving (210) a COM, which comprises information about an occupancy of one or more radio channels; and
   transmitting (220) data from the further vehicle based on the COM via the one or more radio channel.

7. The method (200) according to claim 6, wherein
   the COM comprises information about two or more occupancies of two or more spatial radio channels.

8. The method (200) according to claim 6 or 7, further comprising
   forming or selecting at least one beam for communication between the vehicle and the further vehicle via the one or more radio channel.

9. The method (200) according to any of the claims 6 - 8, further comprising forming or selecting an alternative radio channel based on the COM; and transmitting at least a part of the data via the alternative radio channel.

10. The method (200) according to any of the claims 6 - 9, wherein
    the COM is a broadcast, groupcast or unicast message.

11. The method (200) according to any of the claims 6 - 10, further comprising transmitting a request for receiving the COM; and
    receiving the COM.

**12.** The method (200) according to any of the claims 6 - 11, wherein
the COM further comprises information to enable the further vehicle to determine a position of the vehicle.

**13.** An apparatus (30), comprising:

one or more interfaces (32) configured to communicate with a communication device or user equipment; and
processing circuitry (34) configured to control the one or more interfaces (32) and to: perform the method
according to any of claims 1 - 12.

**14.** A vehicle comprising the apparatus (30) according to claim 13.

**15.** A computer program having a program code for performing the method (100; 200) according to any one of claims
1 - 12, when the computer program is executed on a computer, a processor, or a programmable hardware component.

100

| generating a channel occupation message, COM, which comprises information about an occupancy of one or more radio channels | 110 |
|---|---|
| transmitting the COM to a further vehicle | 120 |

**Fig. 1**

200

| receiving a COM, which comprises information about an occupancy of one or more radio channels | 210 |
|---|---|
| transmitting data from the further vehicle based on the COM via the one or more radio channels | 220 |

**Fig. 2**

Data packet

**Fig. 3a**

freq

Beam 1

time

▨ Occupied resources

**Fig. 3b**

freq

Beam X (BRX)

time

▨ Occupied resources

◩ Requirede resource by transmitter

**Fig. 3c**

TX

RX

interferer

**Fig. 4a**

410    420

TX

RX

interferer

430

**Fig. 4b**

TX    interferer    RX

**Fig. 4c**

**Fig. 5**

**Fig. 6**

A

B

(a) Strategy 1.

A

B

(b) Strategy 2.

**Fig. 7**

az

0

30          -30

60          -60

90          -90

-10    0    10

**Fig. 8**

Fig. 9

Fig. 10

Fig. 11

**Fig. 12**

**Fig. 13**

Europäisches
Patentamt

European
Patent Office

Office européen
des brevets

# EUROPEAN SEARCH REPORT

Application Number

EP 22 17 1510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/229144 A1 (BHARADWAJ ARJUN [US] ET AL) 16 July 2020 (2020-07-16) | 1,3,5,6, 8,9, 11-15 | INV. H04W4/40 H04B7/04 H04W72/04 |
| Y | * abstract * <br> * paragraphs [0047], [0048], [0067] * <br> * paragraphs [0083] - [0085]; figure 3 * <br> * paragraphs [0097] - [0103]; figure 5 * <br> * paragraphs [0152] - [0156]; figure 11 * <br> ----- | 2,7 | |
| X,D | US 2020/221440 A1 (YASUKAWA SHINPEI [JP] ET AL) 9 July 2020 (2020-07-09) <br><br> * paragraphs [0055] - [0063]; figure 4 * <br> * paragraphs [0042], [0105] * <br> ----- | 1,3,4,6, 8-10, 13-15 | |
| X | US 2019/037597 A1 (LEE SEUNGMIN [KR] ET AL) 31 January 2019 (2019-01-31) <br> * abstract * <br> * paragraph [0012] * <br> * paragraphs [0122] - [0135]; figure 8 * <br> ----- | 6,13,15 | |
| Y | EP 3 706 354 A1 (VOLKSWAGEN AG) 9 September 2020 (2020-09-09) <br> * abstract * <br> * paragraph [0029] * <br> ----- | 2,7 | TECHNICAL FIELDS SEARCHED (IPC) <br><br> H04W <br> H04B |

The present search report has been drawn up for all claims

| Place of search | Date of completion of the search | Examiner |
|---|---|---|
| The Hague | 26 August 2022 | Cattrysse, Tom |

EPO FORM 1503 03.82 (P04C01)

## ANNEX TO THE EUROPEAN SEARCH REPORT
## ON EUROPEAN PATENT APPLICATION NO.

EP 22 17 1510

26-08-2022

| Patent document cited in search report | | Publication date | Patent family member(s) | | Publication date |
|---|---|---|---|---|---|
| US 2020229144 | A1 | 16-07-2020 | CN | 113261313 A | 13-08-2021 |
| | | | EP | 3909332 A1 | 17-11-2021 |
| | | | US | 2020229144 A1 | 16-07-2020 |
| | | | WO | 2020146649 A1 | 16-07-2020 |
| US 2020221440 | A1 | 09-07-2020 | CN | 111149302 A | 12-05-2020 |
| | | | US | 2020221440 A1 | 09-07-2020 |
| | | | WO | 2019058435 A1 | 28-03-2019 |
| US 2019037597 | A1 | 31-01-2019 | EP | 3407654 A1 | 28-11-2018 |
| | | | US | 2019037597 A1 | 31-01-2019 |
| | | | WO | 2017126950 A1 | 27-07-2017 |
| EP 3706354 | A1 | 09-09-2020 | CN | 113498588 A | 12-10-2021 |
| | | | EP | 3706354 A1 | 09-09-2020 |
| | | | US | 2022150677 A1 | 12-05-2022 |
| | | | WO | 2020178104 A1 | 10-09-2020 |

**REFERENCES CITED IN THE DESCRIPTION**

**Patent documents cited in the description**

- US 20200221440 A1

- US 20200260440 A1